# EUROPEAN PATENT APPLICATION

(11) **EP 3 813 441 A1**
(43) Date of publication of application: **28.04.2021**
(21) Application number: 19840345.3
(22) Date of filing: 19.07.2019
(51) Int. Cl.: H04W 52/02

(54) **ELECTRONIC DEVICE AND METHOD FOR WIRELESS COMMUNICATION, AND COMPUTER READABLE STORAGE MEDIUM**

(30) Priority: 27.07.2018 CN 201810843895
(71) Applicant: Sony Corporation, 108-0075 Tokyo (JP)
(72) Inventor: CAI, Bowen, Beijing 100876 (CN); CUI, Tao, Beijing 100028 (CN); TAO, Xiaofeng, Beijing 100876 (CN); CUI, Qimei, Beijing 100876 (CN)
(74) Representative: D Young & Co LLP
(86) International application number: PCT/CN2019/096664
(87) International publication number: WO 2020/020050

(57) **Abstract**

Provided in the present disclosure are an electronic device and a method for wireless communication, and a computer readable storage medium, the electronic device comprising: a processing circuit, configured to: acquire a wake-up signal from a base station when a user device executes discontinuous reception on an unlicensed band, the wake-up signal comprising information indicating a paging signal receiving mode; and, on the basis of the wake-up signal, determine an operation of the user device for receiving the paging signal.

## Description

The present application claims priority to Chinese Patent Application No. 201810843895.3, titled "ELECTRONIC DEVICE AND METHOD FOR WIRELESS COMMUNICATION, AND COMPUTER READABLE STORAGE MEDIUM", filed on July 27, 2018 with the China National Intellectual Property Administration, which is incorporated herein by reference in its entirety.

### FIELD

The present disclosure relates to the technical field of wireless communications, and in particular to a discontinuous reception (DRX) technology on an unlicensed frequency band. More particularly, the present disclosure relates to an electronic apparatus and a method for wireless communications and a computer-readable storage medium.

### BACKGROUND

Narrowband internet of things (NB-IoT) is a new wireless communication technology for meeting requirements of internet of things. The NB-IoT has advantages such as improved indoor coverage, supporting for a large number of low throughput apparatuses, low delay sensitivity, ultra-low apparatus cost, low apparatus power consumption, and an optimized network architecture. The NB-IoT is designed for delivering infrequent and short messages between user equipment (UE) and a base station, so that the UE can keep cost efficient and only require a small amount of battery power. Most UE in the NB-IoT are powered by a battery. Therefore, for these UE, power consumption is very important.

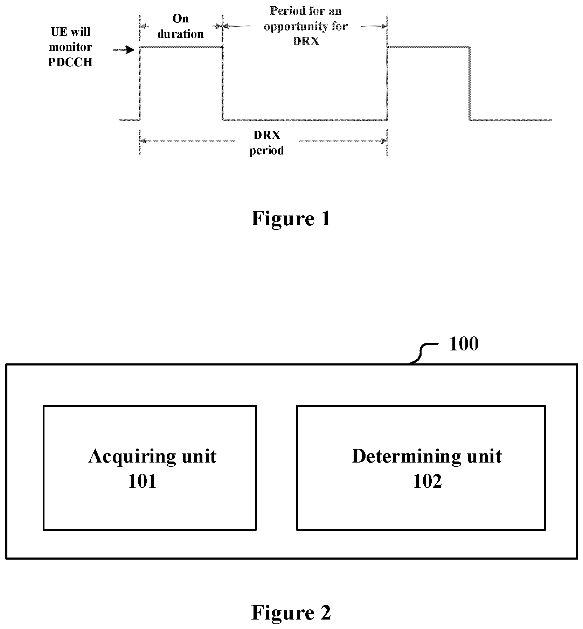

DRX is an important energy-saving mechanism. Each DRX period may include an on duration and a duration for an opportunity for DRX, as shown in Figure 1. In a case that the DRX is configured for UE, the UE monitors and receives a physical downlink control channel (PDCCH) in the on duration and does not monitor the PDCCH for a paging signal during the duration for the opportunity for DRX, thereby reducing power consumption.

### SUMMARY

In the following, an overview of the present disclosure is given simply to provide basic understanding to some aspects of the present disclosure. It should be understood that this overview is not an exhaustive overview of the present disclosure. It is not intended to determine a critical part or an important part of the present disclosure, nor to limit the scope of the present disclosure. An object of the overview is only to give some concepts in a simplified manner, which serves as a preface of a more detailed description described later.

An electronic apparatus for wireless communications is provided according to an aspect of the present disclosure. The electronic apparatus includes processing circuitry. The processing circuitry is configured to: acquire a wake-up signal (WUS) from a base station in a case that user equipment performs discontinuous reception on an unlicensed frequency band, wherein the wake-up signal includes information indicating a receiving manner of a paging signal (PS); and determine, based on the wake-up signal, an operation of the user equipment receiving the paging signal.

A method for wireless communications is provided according to another aspect of the present disclosure. The method includes: acquiring a wake-up signal from a base station in a case that user equipment performs discontinuous reception on an unlicensed frequency band, wherein the wake-up signal includes information indicating a receiving manner of a paging signal; and determining, based on the wake-up signal, an operation of the user equipment receiving the paging signal.

An electronic apparatus for wireless communications is provided according to an aspect of the present disclosure. The electronic apparatus includes processing circuitry. The processing circuitry is configured to: generate a wake-up signal including information indicating a receiving manner of a paging signal, wherein the wake-up signal is used to wake up user equipment in a sleep state and operating in a discontinuous reception mode on an unlicensed frequency band; and transmit the wake-up signal to the user equipment on the unlicensed frequency band.

A method for wireless communications is provided according to another aspect of the present disclosure. The method includes: generating a wake-up signal including information indicating a receiving manner of a paging signal, wherein the wake-up signal is used to wake up user equipment in a sleep state and operating in a discontinuous reception mode on an unlicensed frequency band; and transmitting the wake-up signal to the user equipment on the unlicensed frequency band.

According to other aspects of the present disclosure, there are further provided computer program codes and computer program products for implementing the methods for wireless communications above, and a computer readable storage medium having recorded thereon the computer program codes for implementing the methods for wireless communications described above.

With the electronic apparatus and the method according to the present disclosure, the wake-up signal includes information indicating a receiving manner of a paging signal, so that the paging signal can be received flexibly, thereby further reducing power consumption of the user equipment.

These and other advantages of the present disclosure will be more apparent by illustrating in detail a preferred embodiment of the present disclosure in conjunction with accompanying drawings below.

### BRIEF DESCRIPTION OF THE DRAWINGS

To further set forth the above and other advantages and features of the present disclosure, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present disclosure and should not be construed as a limitation to the scope of the disclosure. In the accompanying drawings:
Figure 1 is a schematic diagram showing a form of a DRX period;
Figure 2 is a block diagram showing functional modules of an electronic apparatus for wireless communications according to an embodiment of the present disclosure;
Figure 3 is a schematic diagram showing showing PS detecting in a case that a time period to be waited for is determined in a random manner;
Figure 4 is a schematic diagram for PS detecting in a case that a counter is adopted as a predetermined limitation strategy;
Figure 5 is a block diagram showing functional modules of an electronic apparatus for wireless communications according to another embodiment of the present disclosure;
Figure 6 is a flowchart of a method for wireless communications according to an embodiment of the present disclosure;
Figure 7 is a flowchart of a method for wireless communications according to another embodiment of the present disclosure;
Figure 8 is a block diagram showing a first example of an exemplary configuration of an eNB or gNB to which the technology according to the present disclosure may be applied;
Figure 9 is a block diagram showing a second example of an exemplary configuration of the eNB or gNB to which the technology according to the present disclosure may be applied;
Figure 10 is a block diagram showing an example of an exemplary configuration of a smartphone to which the technology according to the present disclosure may be applied;
Figure 11 is a block diagram showing an example of an exemplary configuration of a car navigation apparatus to which the technology according to the present disclosure may be applied; and
Figure 12 is a block diagram of an exemplary block diagram illustrating the structure of a general purpose personal computer capable of realizing the method and/or device and/or system according to the embodiments of the present disclosure.

### DETAILED DESCRIPTION OF EMBODIMENTS

An exemplary embodiment of the present disclosure will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a business, and these constraints may change as the embodiments differs. Furthermore, it should also be understood that although the development work may be very complicated and time-consuming, for those skilled in the art benefiting from the present disclosure, such development work is only a routine task.

Here, it should also be noted that in order to avoid obscuring the present disclosure due to unnecessary details, only a device structure and/or processing steps closely related to the solution according to the present disclosure are illustrated in the accompanying drawing, and other details having little relationship to the present disclosure are omitted.

### <First embodiment

UE periodically detects a WUS when performing DRX on a licensed frequency band. In response to detecting the WUS, the UE wakes up from a sleep state and detects a paging signal according to a paging occasion (PO) indicated by the WUS. That is, the UE acquires the paging signal (PS) by decoding a PDCCH. The WUS may indicate one or more POs in one paging frame (PF). On the other hand, in a case that the UE fails to detect a WUS, the UE keeps in the sleep state.

However, on an unlicensed frequency band, a base station probably cannot transmit a WUS and a subsequently transmitted PS in a maximum channel occupancy time (MCOT) due to a large time interval between the WUS and the corresponding PS. After the WUS is transmitted, an unlicensed channel may be occupied by another apparatus. Therefore, a channel detection, for example, listen before talk (LBT) of the base station may indicate that the channel is occupied on a PO indicated by the WUS, resulting in that the PS cannot be transmitted timely. In this case, the UE cannot receive the PS on the PO indicated by the WUS. In order to prevent the UE from performing an unnecessary receiving operation in a case that the unlicensed frequency band is busy so as to reduce power consumption of the UE, an electronic apparatus 100 is provided below according to the embodiment.

Figure 2 is a block diagram showing functional modules of the electronic apparatus 100 for wireless communications according to an embodiment of the present disclosure. As shown in Figure 2, the electronic apparatus 100 includes an acquiring unit 101 and a determining unit 102. The acquiring unit 101 is configured to acquire a WUS from a base station in a case that UE performs DRX on an unlicensed frequency band. The WUS includes information indicating a receiving manner of a PS. The determining unit 102 is configured to determine, based on the WUS, an operation of the user equipment receiving the PS.

The acquiring unit 101 and the determining unit 102 may be implemented by one or more processing circuitries. The processing circuitry may be implemented as, for example, a chip. In addition, it should be understood that various functional units in the apparatus shown in Figure 2 are only logical modules divided based on functions implemented by these functional units, and are not intended to limit implementations, which is also applicable to examples of other electronic apparatuses described subsequently.

The electronic apparatus 100 may be arranged at a side of the UE or may be communicatively connected to the UE. Here it should be pointed out that the electronic apparatus 100 may be implemented at a chip level or an apparatus level. For example, the electronic apparatus 100 may serve as the user equipment itself and further include external apparatuses such as a memory and a transceiver (which are not shown in the drawings). The memory may be configured to store programs to be executed and related data information for the user equipment to implement various functions. The transceiver may include one or more communication interfaces to support communications with various apparatuses (for example, a base station, other user equipment and the like). Implementations of the transceiver are not limited herein.

In the DRX mode, for example, when it is required to transmit data to the UE, the base station first transmits a wake-up signal WUS to wake up the UE from a sleep state so that the UE may receive the data subsequently. The UE may receive the WUS in a radio resource control (RRC) connected state or in an RRC idle state. In addition, the WUS may support measurement function. For example, the WUS may play the function of a reference signal, so as to reduce power consumption of the user equipment resulted from an additional measurement of another signal.

In addition, the WUS may be transmitted via a UE specific PDCCH or a group based PDCCH, where the WUS may be included in downlink control information (DCI) in both cases.

As described above, the WUS includes indication of the paging occasion PO for receiving the PS. After receiving the WUS successfully, the UE in the sleep state may know when to detect the PS. For example, the UE decodes the PDCCH to detect the PS at the indicated PO. In the embodiment, the WUS includes information indicating a receiving manner of the PS. Based on the information, the UE may receive the PS more flexibly, thereby further reducing power consumption.

In addition, the WUS may further include information indicating whether to receive the PS or not. After the acquiring unit 101 acquires the WUS, the determining unit 102 determines, based on the WUS, an operation of the user equipment receiving the PS.

For example, the information indicating the receiving manner of the PS in the WUS includes indication information of a predetermined limitation strategy to be adopted. The predetermined limitation strategy is used to limit the number of detections for the PS. To be understood, in a case that the number of detections for the PS is limited, unnecessary detections for the PS can be avoided in a case that the unlicensed frequency band is busy, thereby reducing power consumption of the UE.

In an example, the indication information of the predetermined limitation strategy may include an information bit indicating whether to adopt the predetermined limitation strategy or not. In this case, the base station and the user equipment acquire the predetermined limitation strategy in advance. Therefore, only one bit of information bit is required to indicate whether to adopt the predetermined limitation strategy or not. For example, in a case that a value of the information bit is set to be "1", it means that the predetermined limitation strategy is to be adopted. In a case that the value of the information bit is set to be "0", it means that the predetermined limitation strategy is not to be adopted. Alternatively, the indication information of the predetermined limitation strategy may include a designation of a parameter involved in the predetermined limitation strategy.

In addition, in a case of there being multiple predetermined limitation strategies, the indication information of the predetermined limitation strategy may further include a designation of a predetermined limitation strategy to be adopted in particular.

In an example, the predetermined limitation strategy includes a back-off strategy. The determining unit 102 is configured to, in a case that a first detection for the PS fails, perform a second detection after waiting for a time period determined by the back-off strategy. The waiting is referred to as back-off. A failure in detection for the PS indicates that the PS is not detected. That is, the PDCCH is not decoded successfully. It should be understood that the first and the second herein are merely for indicating a sequence rather than expressing an absolute sense of first time and second time.

As described above, the WUS may further include positions and the number of POs for detecting the PS in a paging frame. For example, in a case that the determining unit 102 fails to detect the PS at the first PO, the determining unit 102 does not detect the PS at a second PO subsequently but detects the PS at a latter PO after skipping the second PO or multiple POs. In this example, the time period to be waited for may be denoted by the number of POs for detecting the PS in the paging frame. For example, the back-off strategy includes determining the time period to be waited for in a random manner or according to a predetermined rule.

In a case that the time period to be waited for is determined in a random manner, the determining unit 102, for example, selects a number n from a set {0, 1, 2, ......, K} in a random manner, and detects the PS at a (2ⁿ+1)th PO from the PO on which a detection for the PS fails after waiting for 2ⁿ POs.

In a case that the time period to be waited for is determined according to the predetermined rule, for example, the time period to be waited for may be determined according to the number of failures in detecting the PS. If the number of failures in detecting the PS is expressed by k, the PS is detected at a (2^{k-1}+1)th PO from the PO at which the detection for the PS fails after waiting for 2^{k-1} POs in a case that the k-th detection for the PS fails. This is only an example of the predetermined rule. Various predetermined rules may be adopted according to requirements, which are not limited herein.

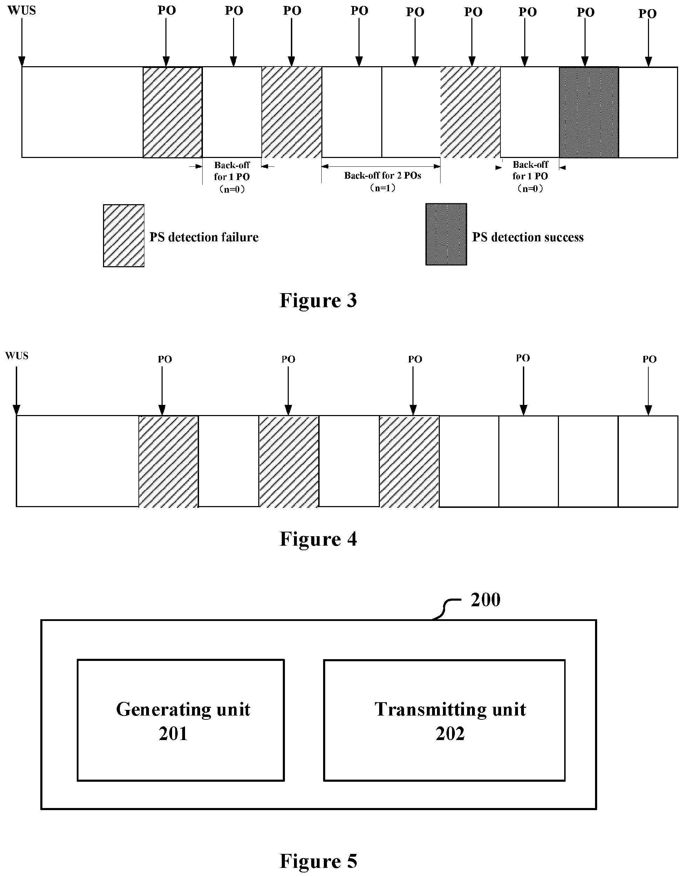

In order to facilitate understanding, Figure 3 shows a schematic diagram for detecting a PS in a case that a time period to be waited for is determined in a random manner. As shown in Figure 3, there is an interval between the receiving of the WUS and a PO. The UE detects the PS at a first PO after the interval. However, this detection fails (which is denoted with diagonal lines in Figure 3). The determining unit 102 selects n equal to 0 in a random manner. The UE detects the PS again after backing off for one PO. The second detection for the PS still fails. The determining unit 102 selects n equal to 1 in a random manner. The UE detects the PS again after backing off for two POs. The third detection for the PS fails. The determining unit 102 selects n equal to 0 in a random manner. The UE detects the PS again after backing off for one PO. Finally, the UE detects the PS successfully at the eighth PO (which is denoted with gray in Figure 3).

As can be seen, the UE is required to attempt to detect the PS at each PO in a conventional manner. Therefore, eight detections are required to be performed. However, by adopting the back-off strategy according to the present disclosure, the UE can successfully detect the PS by performing only three detections, thereby effectively reducing power consumption of the UE.

In addition, the determining unit 102 is further configured to, in a case that the determining unit 102 fails to detects the PS in a paging frame, stop detecting the PS and cause the UE to turn to a sleep state to wait for a next WUS.

In another example, the predetermined limitation strategy may include setting a counter. The counter is configured to count the number of failures in detecting the PS. The determining unit 102 is configured to stop detecting the PS and cause the UE to turn to the sleep state, when the counting of the counter reaches a predetermined threshold.

The predetermined threshold may be set to be less than the number of POs for detecting the PS in a paging frame. Figure 4 shows a schematic diagram of the PS detecting in a case that a counter is adopted as a predetermined limitation strategy. In the example shown in Figure 4, the WUS indicates five POs. The UE detects the PS at the five POs in sequence. The predetermined threshold is set to be 3. Each time the detection for the PS fails, the counting of the counter is increased by one. When the number of failures in detecting the PS reaches three, the counting of the counter reaches three. The UE stops detecting the PS. The counter is reset and the UE turns to the sleep state.

In addition, the determining unit 102 is further configured to reset the counter, in a case that the PS is detected before the counting of the counter reaches the predetermined threshold.

When the unlicensed frequency band is busy, the channel detection may indicate that the channel is occupied by another apparatus, resulting that the base station probably cannot transmit the PS during a period of time after transmitting the WUS. In this case, the UE apparently cannot detect the PS. In this example, whether the channel is busy is determined by setting the counter, thereby stopping detecting the PS, in order to avoid unnecessary detection operations, reducing power consumption of the UE.

In another example, the predetermined limitation strategy may include the back-off strategy and setting a counter. That is, the predetermined limitation strategies in the above two examples may be adopted in combination. In this case, the determining unit 102 may be configured to, in a case that a first detection for the PS fails, perform a second detection after waiting for a time period determined by the back-off strategy. The counter is configured to count the number of failures in detecting the PS. The determining unit 102 is configured to stop detecting the PS and cause the UE to turn to a sleep state, when the counting of the counter exceeds a predetermined threshold.

By combining the two strategies, power consumption can be reduced more effectively while improving the probability of detecting the PS. It should be understood that though an example in which the NB-IoT serves as an application scenario is described above, the technology according to the present disclosure is not limited to the scenario and is applicable to any scenario in which the WUS is required to be received.

### <Second embodiment

Figure 5 is a block diagram showing functional modules of an electronic apparatus 200 for wireless communications according to another embodiment of the present disclosure. As shown in Figure 5, the electronic apparatus 200 includes a generating unit 201 and a transmitting unit 202. The generating unit 201 is configured to generate a WUS including information indicating a receiving manner of a PS. The WUS is used to wake up UE in a sleep state and operating in a discontinuous reception mode on an unlicensed frequency band. The transmitting unit 202 is configured to transmit the WUS to the UE on the unlicensed frequency band.

Similarly, the generating unit 201 and the transmitting unit 202 may be implemented by one or more processing circuitries. The processing circuitry may be implemented as, for example, a chip. In addition, it should be understood that various functional units in the apparatus shown in Figure 5 are logical modules divided based on functions implemented by these functional units, and are not intended to limit implementations.

The electronic apparatus 200 may be arranged at a side of a base station or may be communicatively connected to a base station. Here, it should be pointed out that the electronic apparatus 200 may be implemented at a chip level or an apparatus level. For example, the electronic apparatus 200 may serve as the base station itself and further include external apparatuses such as a memory and a transceiver (which are not shown in the drawings). The memory may be configured to store programs to be executed and related data information for the base station to implement various functions. The transceiver may include one or more communication interfaces to support communications with various apparatuses (for example, user equipment, another base station and the like). Implementations of the transceiver are not limited herein.

The electronic apparatus 200 in the embodiment is configured to transmit the WUS to the UE so as to configure a manner of the UE receiving the PS based on the WUS. In addition, the WUS may further include information indicating whether the UE is to receive the PS or not. The WUS further includes positions and the number of POs for detecting the PS in a paging frame.

After transmitting the WUS, the base station is to transmit the PS to the UE according to the timing of the PO. As shown in Figure 3 and Figure 4, there is a time interval between transmission of the WUS and transmission of the PS. For example, the transmitting unit 202 is configured to transmit a paging frame including the PS via a PDCCH after transmitting the WUS. However, on the unlicensed frequency band, the base station may fail to access the channel at the timing of the PO. Therefore, some PSs may fail to be transmitted since the channel is busy. The wake-up signal includes information indicating the receiving manner of the PS, so that the UE can receive the PS flexibly, thereby reducing power consumption of the UE.

For example, the information indicating the receiving manner of the PS includes information of a predetermined limitation strategy to be adopted by the UE. The predetermined limitation strategy is used to limit the number of detections for the paging signal. In an example, the indication information of the predetermined limitation strategy includes an information bit indicating whether to adopt the predetermined limitation strategy or not. The indication information of the predetermined limitation strategy is described in detail in the first embodiment and is not repeated here.

In an example, the predetermined limitation strategy includes a back-off strategy. The UE, in a case that a first detection for the PS fails, performs a second detection after waiting for a time period determined by the back-off strategy. The back-off strategy includes determining the time period to be waited for in a random manner or according to a predetermined rule. The time period to be waited for may be denoted by the number of POs for detecting the PS in a paging frame. For example, the back-off strategy includes determining the time period to be waited for according to the number of failures in detecting the PS.

In another example, the predetermined limitation strategy includes setting a counter. The counter is configured to count the number of failures in detecting the PS by the UE. The UE stops detecting the PS and turns to a sleep state when the counting of the counter reaches a predetermined threshold. For example, the WUS may further include setting information of the predetermined threshold. The predetermined threshold is less than the number of POs for detecting the PS in a paging frame.

In yet another example, the predetermined limitation strategy may include the back-off strategy and setting a counter. The UE, in a case that a first detection for the PS fails, performs a second detection after waiting for a time period determined by the back-off strategy. The counter is configured to count the number of failures in detecting the PS. The UE stops detecting the PS and turns to a sleep state when the counting of the counter reaches the predetermined threshold.

The predetermined limitation strategy in the above examples is described in detail in the first embodiment and is not repeated here.

With the electronic apparatus 200 according to the embodiment, the WUS includes information indicating the receiving manner of the PS, so that the UE can receive the PS flexibly for example, so as to avoid an unnecessary receiving operation, thereby reducing power consumption.

### <Third embodiment

In the process of describing the electronic apparatus for wireless communications in the embodiments described above, obviously, some processing and methods are also disclosed. Hereinafter, an overview of the methods is given without repeating some details disclosed above. However, it should be noted that, although the methods are disclosed in a process of describing the electronic apparatus for wireless communications, the methods do not certainly employ or are not certainly executed by the aforementioned components. For example, the embodiments of the electronic apparatus for wireless communications may be partially or completely implemented with hardware and/or firmware, the methods for wireless communications described below may be executed by a computer-executable program completely, although the hardware and/or firmware of the electronic apparatus for wireless communications can also be used in the methods.

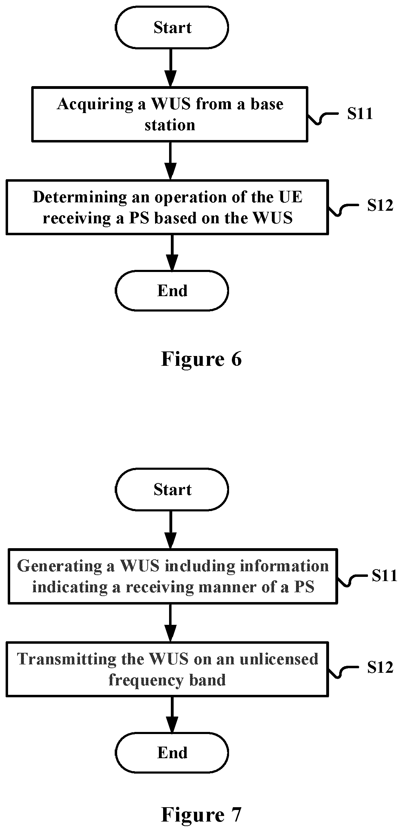

Figure 6 is a flowchart of a method for wireless communications according to an embodiment of the present disclosure. As shown in Figure 6, the method includes: acquiring a WUS from a base station in a case that UE performs DRX on an unlicensed frequency band (S11), wherein the WUS includes information indicating a receiving manner of a paging signal; and determining, based on the WUS, an operation of the user equipment receiving the paging signal (S12). The method may be implemented at a side of the user equipment.

The WUS may further include positions and the number of paging occasions for detecting the paging signal in a paging frame. The WUS may further include information indicating whether to receive the PS or not. The WUS may be received when the UE is in a sleep state.

For example, the information indicating the receiving manner of the paging signal includes indication information of a predetermined limitation strategy to be adopted. The predetermined limitation strategy is used to limit the number of detections for the paging signal. For example, the indication information of the predetermined limitation strategy may include an information bit indicating whether to adopt the predetermined limitation strategy or not.

Illustratively, in step S12, the predetermined limitation strategy includes a back-off strategy. In a case that a first detection for the paging signal fails, a second detection is performed after a time period determined by the back-off strategy is waited for. For example, the paging signal is detected by decoding the PDCCH. The back-off strategy includes determining the time period to be waited for in a random manner or according to a predetermined rule. The time period to be waited for may be denoted by the number of paging occasions for detecting the paging signal in a paging frame. For example, the back-off strategy includes determining the time period to be waited for according to the number of failures in detecting the paging signal.

In a case that no paging signal is detected in a paging frame, detecting of the paging signal is stopped and the user equipment is turned to a sleep state.

In addition, the predetermined limitation strategy may include setting a counter. The counter is configured to count the number of failures in detecting the paging signal. The detecting of the paging signal is stopped and the user equipment is turned to a sleep state when the counting of the counter reaches a predetermined threshold. The predetermined threshold, for example, is less than the number of paging occasions for detecting the paging signal in a paging frame.

In a case that the paging signal is detected before the counting of the counter reaches the predetermined threshold, the counter is reset.

In addition, the predetermined limitation strategy may include both the back-off strategy and setting a counter. In a case that a first detection for the paging signal fails, a second detection is performed after a time period determined by the back-off strategy is waited for. The counter is configured to count the number of failures in detecting the paging signal. The detecting of the paging signal is stopped and the user equipment is turned to a sleep state when the counting of the counter reaches a predetermined threshold.

Figure 7 is a flowchart of a method for wireless communications according to an embodiment of the present disclosure. As shown in Figure 7, the method includes: generating a wake-up signal including information indicating a receiving manner of a paging signal (S21), wherein the wake-up signal is used to wake up user equipment in a sleep state and operating in a DRX mode on an unlicensed frequency band; and transmitting the wake-up signal to the user equipment on the unlicensed frequency band (S22). The method may be implemented at a side of a base station.

The information indicating the receiving manner of the paging signal includes indication information of a predetermined limitation strategy to be adopted by the user equipment. The predetermined limitation strategy is used to limit the number of detections for the paging signal. The indication information of the predetermined limitation strategy may include an information bit indicating whether to adopt the predetermined limitation strategy or not.

The predetermined limitation strategy includes a back-off strategy. The user equipment, in a case that a first detection for the paging signal fails, performs a second detection after waiting for a time period determined by the back-off strategy. The back-off strategy includes determining the time period to be waited for in a random manner or according to a predetermined rule. The time period to be waited for is denoted by the number of paging occasions for detecting the paging signal in a paging frame. For example, the back-off strategy includes determining the time period to be waited for according to the number of failures in detecting the paging signal.

The predetermined limitation strategy may include setting a counter. The counter is configured to count the number of failures in detecting the paging signal by the user equipment. The user equipment stops detecting the paging signal and turns to a sleep state when the counting of the counter reaches a predetermined threshold. The predetermined threshold is less than the number of paging occasions for detecting the paging signal in a paging frame.

In addition, the predetermined limitation strategy may include both the back-off strategy and setting a counter. The user equipment, in a case that a first detection for the paging signal fails, performs a second detection after waiting for a time period determined by the back-off strategy. The counter is configured to count the number of failures in detecting the paging signal. The user equipment stops detecting the paging signal and turns to a sleep state when the counting of the counter reaches a predetermined threshold.

A paging frame including the paging signal may be transmitted via a physical downlink control channel after the wake-up signal is transmitted.

It should be noted that above methods may be utilized in combination or separately. Details of the above methods are described in the first to second embodiments, and are not repeated here.

The technology according to the present disclosure is applicable to various products.

For example, the electronic apparatus 200 may be implemented as various base stations. The base station may be implemented as any type of evolved node B (eNB) or gNB (a 5G base station). The eNB includes, for example, a macro eNB and a small eNB. The small eNB may be an eNB covering a cell smaller than a macro cell, such as a pico eNB, a micro eNB, and a home (femto) eNB. The case for the gNB is similar to the above. Alternatively, the base station may be implemented as any other type of base station, such as a NodeB and a base transceiver station (BTS). The base station may include: a main body (also referred to as a base station apparatus) configured to control wireless communication; and one or more remote radio head ends (RRH) located at positions different from the main body. In addition, various types of user equipments may each serve as a base station by performing functions of the base station temporarily or semi-permanently.

The electronic apparatus 100 may be implemented as various user equipments. The user equipment may be implemented as a mobile terminal (such as a smartphone, a tablet personal computer (PC), a notebook PC, a portable game terminal, a portable/dongle-type mobile router, and a digital camera device) or an in-vehicle terminal such as a car navigation apparatus. The user equipment may also be implemented as a terminal (also referred to as a machine type communication (MTC) terminal) that performs machine-to-machine (M2M) communication. In addition, the user equipment may be a wireless communication module (such as an integrated circuit module including a single chip) mounted on each of the terminals described above.

### [Application example regarding a base station]

### (First application example)

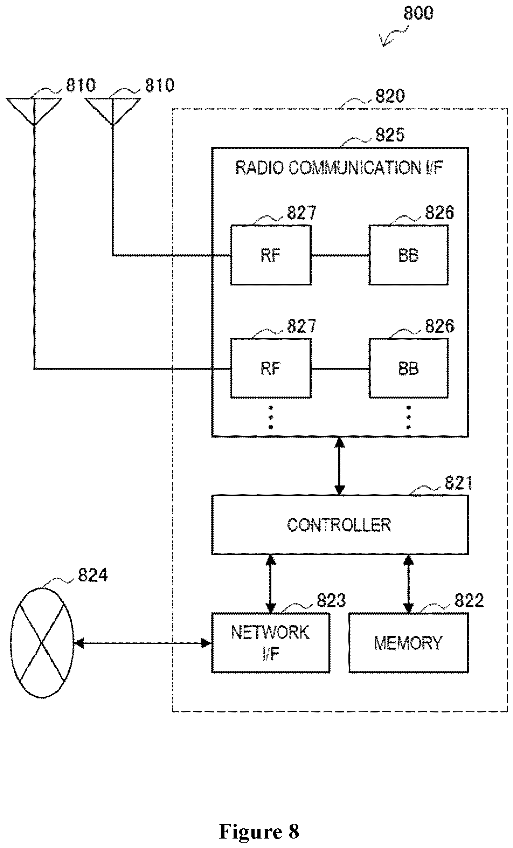

Figure 8 is a block diagram showing a first example of an exemplary configuration of an eNB or gNB to which technology according to the present disclosure may be applied. It should be noted that the following description is given by taking the eNB as an example, which is also applicable to the gNB. An eNB 800 includes one or more antennas 810 and a base station apparatus 820. The base station apparatus 820 and each of the antennas 810 may be connected to each other via a radio frequency (RF) cable.

Each of the antennas 810 includes a single or multiple antennal elements (such as multiple antenna elements included in a multiple-input multiple-output (MIMO) antenna), and is used for the base station apparatus 820 to transmit and receive wireless signals. As shown in Figure 8, the eNB 800 may include the multiple antennas 810. For example, the multiple antennas 810 may be compatible with multiple frequency bands used by the eNB 800. Although Figure 8 shows the example in which the eNB 800 includes the multiple antennas 810, the eNB 800 may also include a single antenna 810.

The base station apparatus 820 includes a controller 821, a memory 822, a network interface 823, and a radio communication interface 825.

The controller 821 may be, for example, a CPU or a DSP, and operates various functions of a higher layer of the base station apparatus 820. For example, the controller 821 generates a data packet from data in signals processed by the radio communication interface 825, and transfers the generated packet via the network interface 823. The controller 821 may bundle data from multiple base band processors to generate the bundled packet, and transfer the generated bundled packet. The controller 821 may have logical functions of performing control such as radio resource control, radio bearer control, mobility management, admission control and scheduling. The control may be performed in corporation with an eNB or a core network node in the vicinity. The memory 822 includes a RAM and a ROM, and stores a program executed by the controller 821 and various types of control data (such as terminal list, transmission power data and scheduling data).

The network interface 823 is a communication interface for connecting the base station apparatus 820 to a core network 824. The controller 821 may communicate with a core network node or another eNB via the network interface 823. In this case, the eNB 800, and the core network node or another eNB may be connected to each other via a logic interface (such as an S1 interface and an X2 interface). The network interface 823 may also be a wired communication interface or a wireless communication interface for wireless backhaul. If the network interface 823 is a wireless communication interface, the network interface 823 may use a higher frequency band for wireless communication than that used by the radio communication interface 825.

The radio communication interface 825 supports any cellular communication scheme (such as Long Term Evolution (LTE) and LTE-advanced), and provides wireless connection to a terminal located in a cell of the eNB 800 via the antenna 810. The radio communication interface 825 may typically include, for example, a baseband (BB) processor 826 and an RF circuit 827. The BB processor 826 may perform, for example, encoding/decoding, modulating/demodulating, and multiplexing/demultiplexing, and performs various types of signal processing of layers (such as L1, Media Access Control (MAC), Radio Link Control (RLC), and a Packet Data Convergence Protocol (PDCP)). The BB processor 826 may have a part or all of the above-described logical functions instead of the controller 821. The BB processor 826 may be a memory storing communication control programs, or a module including a processor and a related circuit configured to execute the programs. Updating the program may allow the functions of the BB processor 826 to be changed. The module may be a card or a blade that is inserted into a slot of the base station apparatus 820. Alternatively, the module may also be a chip that is mounted on the card or the blade. Meanwhile, the RF circuit 827 may include, for example, a mixer, a filter, and an amplifier, and transmits and receives wireless signals via the antenna 810.

As shown in Figure 8, the radio communication interface 825 may include the multiple BB processors 826. For example, the multiple BB processors 826 may be compatible with multiple frequency bands used by the eNB 800. The radio communication interface 825 may include multiple RF circuits 827, as shown in Figure 8. For example, the multiple RF circuits 827 may be compatible with multiple antenna elements. Although Figure 8 shows the example in which the radio communication interface 825 includes the multiple BB processors 826 and the multiple RF circuits 827, the radio communication interface 825 may also include a single BB processor 826 and a single RF circuit 827.

In the eNB 800 shown in Figure 8, a transceiver of the electronic apparatus 200 may be implemented by the radio communication interface 825. At least a part of functions may also be implemented by the controller 821. For example, the controller 821 may generate and transmit the WUS including information indicating the receiving manner of the PS by performing functions of the generating unit 201 and the transmitting unit 202, thereby reducing power consumption of the UE when detecting the PS.

### (Second application example)

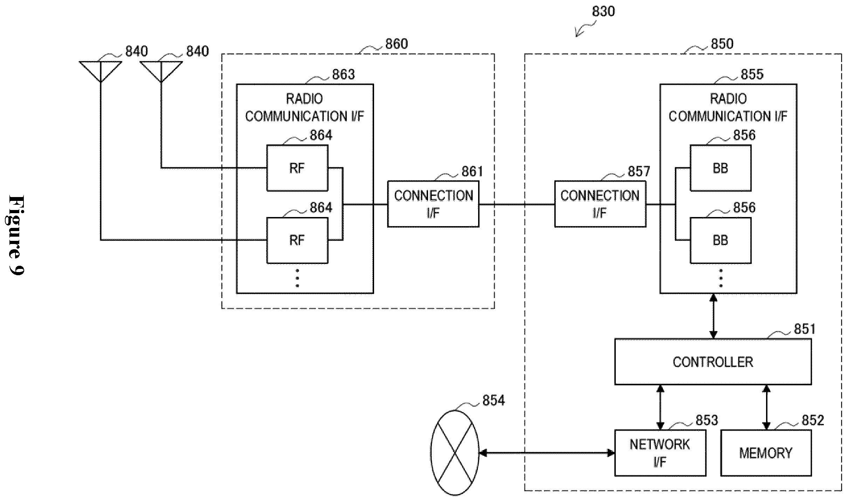

Figure 9 is a block diagram showing a second example of the exemplary configuration of an eNB or gNB to which the technology according to the present disclosure may be applied. It should be noted that the following description is given by taking the eNB as an example, which is also applied to the gNB. An eNB 830 includes one or more antennas 840, a base station apparatus 850, and an RRH 860. The RRH 860 and each of the antennas 840 may be connected to each other via an RF cable. The base station apparatus 850 and the RRH 860 may be connected to each other via a high speed line such as an optical fiber cable.

Each of the antennas 840 includes a single or multiple antennal elements (such as multiple antenna elements included in an MIMO antenna), and is used for the RRH 860 to transmit and receive wireless signals. As shown in Figure 9, the eNB 830 may include the multiple antennas 840. For example, the multiple antennas 840 may be compatible with multiple frequency bands used by the eNB 830. Although Figure 9 shows the example in which the eNB 830 includes the multiple antennas 840, the eNB 830 may also include a single antenna 840.

The base station apparatus 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to Figure 8.

The radio communication interface 855 supports any cellular communication scheme (such as LTE and LTE-advanced), and provides wireless communication to a terminal located in a sector corresponding to the RRH 860 via the RRH 860 and the antenna 840. The radio communication interface 855 may typically include, for example, a BB processor 856. The BB processor 856 is the same as the BB processor 826 described with reference to Figure 8, except that the BB processor 856 is connected to an RF circuit 864 of the RRH 860 via the connection interface 857. As show in Figure 9, the radio communication interface 855 may include the multiple BB processors 856. For example, the multiple BB processors 856 may be compatible with multiple frequency bands used by the eNB 830. Although Figure 9 shows the example in which the radio communication interface 855 includes the multiple BB processors 856, the radio communication interface 855 may also include a single BB processor 856.

The connection interface 857 is an interface for connecting the base station apparatus 850 (radio communication interface 855) to the RRH 860. The connection interface 857 may also be a communication module for communication in the above-described high speed line that connects the base station apparatus 850 (radio communication interface 855) to the RRH 860.

The RRH 860 includes a connection interface 861 and a radio communication interface 863.

The connection interface 861 is an interface for connecting the RRH 860 (radio communication interface 863) to the base station apparatus 850. The connection interface 861 may also be a communication module for communication in the above-described high speed line.

The radio communication interface 863 transmits and receives wireless signals via the antenna 840. The radio communication interface 863 may typically include, for example, the RF circuit 864. The RF circuit 864 may include, for example, a mixer, a filter and an amplifier, and transmits and receives wireless signals via the antenna 840. The radio communication interface 863 may include multiple RF circuits 864, as shown in Figure 9. For example, the multiple RF circuits 864 may support multiple antenna elements. Although Figure 9 shows the example in which the radio communication interface 863 includes the multiple RF circuits 864, the radio communication interface 863 may also include a single RF circuit 864.

In the eNB 830 shown in Figure 9, a transceiver of the electronic apparatus 200 may be implemented by the radio communication interface 825. At least a part of functions may also be implemented by the controller 821. For example, the controller 821 may generate and transmit the WUS including information indicating the receiving manner of the PS by performing functions of the generating unit 201 and the transmitting unit 202, thereby reducing power consumption of the UE when detecting the PS.

### <Application example for user equipment>

### (First application example)

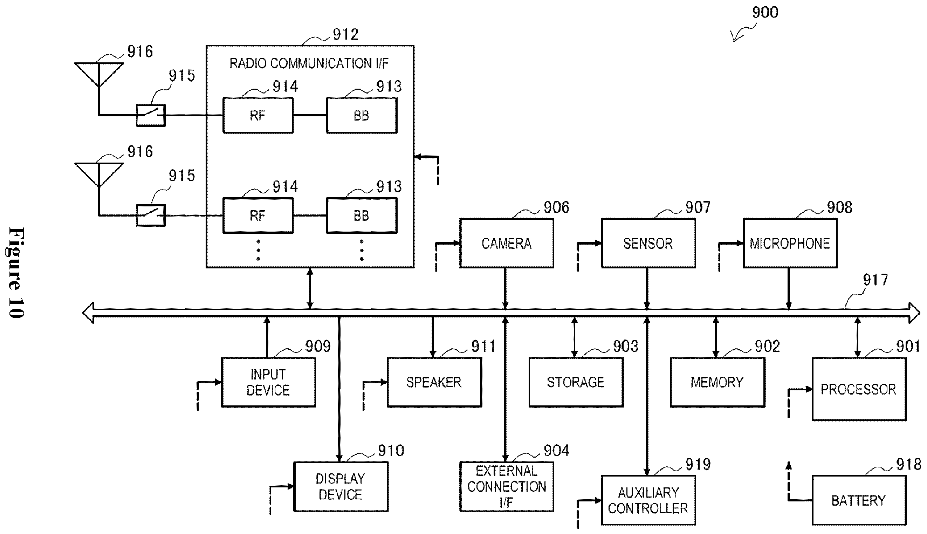

Figure 10 is a block diagram showing an exemplary configuration of a smartphone 900 to which the technology according to the present disclosure may be applied. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes a RAM and a ROM, and stores a program executed by the processor 901 and data. The storage 903 may include a storage medium such as a semiconductor memory and a hard disk. The external connection interface 904 is an interface for connecting an external device (such as a memory card and a universal serial bus (USB) device) to the smartphone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetism sensor, and an acceleration sensor. The microphone 908 converts sounds that are inputted to the smartphone 900 to audio signals. The input device 909 includes, for example, a touch sensor configured to detect touch onto a screen of the display device 910, a keypad, a keyboard, a button, or a switch, and receives an operation or information inputted from a user. The display device 910 includes a screen (such as a liquid crystal display (LCD) and an organic light-emitting diode (OLED) display), and displays an output image of the smartphone 900. The speaker 911 converts audio signals that are outputted from the smartphone 900 to sounds.

The radio communication interface 912 supports any cellular communication scheme (such as LTE and LTE-advanced), and performs a wireless communication. The radio communication interface 912 may include, for example, a BB processor 913 and an RF circuit 914. The BB processor 913 may perform, for example, encoding/decoding, modulating/demodulating, and multiplexing/de-multiplexing, and perform various types of signal processing for wireless communication. The RF circuit 914 may include, for example, a mixer, a filter and an amplifier, and transmits and receives wireless signals via the antenna 916. It should be noted that although Figure 10 shows a case that one RF link is connected to one antenna, which is only illustrative, and a case that one RF link is connected to multiple antennas through multiple phase shifters may also exist. The radio communication interface 912 may be a chip module having the BB processor 913 and the RF circuit 914 integrated thereon. The radio communication interface 912 may include multiple BB processors 913 and multiple RF circuits 914, as shown in Figure 10. Although Figure 10 shows the example in which the radio communication interface 912 includes the multiple BB processors 913 and the multiple RF circuits 914, the radio communication interface 912 may also include a single BB processor 913 or a single RF circuit 914.

Furthermore, in addition to a cellular communication scheme, the radio communication interface 912 may support another type of wireless communication scheme such as a short-distance wireless communication scheme, a near field communication scheme, and a radio local area network (LAN) scheme. In this case, the radio communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the radio communication interface 912.

Each of the antennas 916 includes a single or multiple antenna elements (such as multiple antenna elements included in an MIMO antenna) and is used for the radio communication interface 912 to transmit and receive wireless signals. The smartphone 900 may include the multiple antennas 916, as shown in Figure 10. Although Figure 10 shows the example in which the smartphone 900 includes the multiple antennas 916, the smartphone 900 may also include a single antenna 916.

Furthermore, the smartphone 900 may include the antenna 916 for each wireless communication scheme. In this case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to blocks of the smart phone 900 shown in Figure 10 via feeder lines that are partially shown as dashed lines in Figure 10. The auxiliary controller 919, operates a minimum necessary function of the smart phone 900, for example, in a sleep mode.

In the smartphone 900 shown in Figure 10, a transceiver of the electronic apparatus 100 may be implemented by the radio communication interface 912. At least a part of functions may also be implemented by the processor 901 or the auxiliary controller 919. For example, the processor 901 or the auxiliary controller 919 may acquire the WUS including information indicating the receiving manner of the PS and flexibly detect the PS in the indicated receiving manner of the PS by performing functions of the acquiring unit 101 and the determining unit 102, thereby reducing power consumption.

### (Second application example)

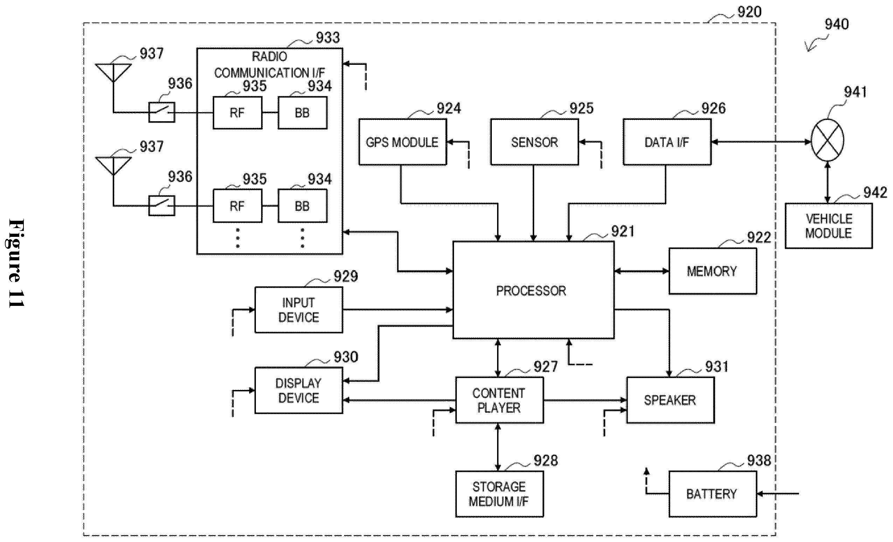

Figure 11 is a block diagram showing an example of a schematic configuration of a car navigation apparatus 920 to which the technology according to the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example a CPU or a SoC, and controls a navigation function and additional function of the car navigation apparatus 920. The memory 922 includes RAM and ROM, and stores a program that is executed by the processor 921, and data.

The GPS module 924 determines a position (such as latitude, longitude and altitude) of the car navigation apparatus 920 by using GPS signals received from a GPS satellite. The sensor 925 may include a group of sensors such as a gyro sensor, a geomagnetic sensor and an air pressure sensor. The data interface 926 is connected to, for example, an in-vehicle network 941 via a terminal that is not shown, and acquires data (such as vehicle speed data) generated by the vehicle.

The content player 927 reproduces content stored in a storage medium (such as a CD and a DVD) that is inserted into the storage medium interface 928. The input device 929 includes, for example, a touch sensor configured to detect touch onto a screen of the display device 930, a button, or a switch, and receives an operation or information inputted from a user. The display device 930 includes a screen such as an LCD or OLED display, and displays an image of the navigation function or content that is reproduced. The speaker 931 outputs a sounds for the navigation function or the content that is reproduced.

The radio communication interface 933 supports any cellular communication scheme (such as LTE and LTE-Advanced), and performs wireless communication. The radio communication interface 933 may typically include, for example, a BB processor 934 and an RF circuit 935. The BB processor 934 may perform, for example, encoding/decoding, modulating/demodulating and multiplexing/demultiplexing, and perform various types of signal processing for wireless communication. The RF circuit 935 may include, for example, a mixer, a filter and an amplifier, and transmits and receives wireless signals via the antenna 937. The radio communication interface 933 may also be a chip module having the BB processor 934 and the RF circuit 935 integrated thereon. The radio communication interface 933 may include multiple BB processors 934 and multiple RF circuits 935, as shown in Figure 11. Although Figure 11 shows the example in which the radio communication interface 933 includes the multiple BB processors 934 and the multiple RF circuits 935, the radio communication interface 933 may also include a single BB processor 934 and a single RF circuit 935.

Furthermore, in addition to a cellular communication scheme, the radio communication interface 933 may support another type of wireless communication scheme such as a short-distance wireless communication scheme, a near field communication scheme, and a wireless LAN scheme. In this case, the radio communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the radio communication interface 933.

Each of the antennas 937 includes a single or multiple antenna elements (such as multiple antenna elements included in an MIMO antenna), and is used by the radio communication interface 933 to transmit and receive wireless signals. As shown in Figure 11, the car navigation apparatus 920 may include the multiple antennas 937. Although Figure 11 shows the example in which the car navigation apparatus 920 includes the multiple antennas 937, the car navigation apparatus 920 may also include a single antenna 937.

Furthermore, the car navigation apparatus 920 may include the antenna 937 for each wireless communication scheme. In this case, the antenna switches 936 may be omitted from the configuration of the car navigation apparatus 920.

The battery 938 supplies power to the blocks of the car navigation apparatus 920 shown in Figure 11 via feeder lines that are partially shown as dash lines in Figure 11. The battery 938 accumulates power supplied from the vehicle.

In the car navigation apparatus 920 shown in Figure 11, a transceiver of the electronic apparatus 1001 may be implemented by the radio communication interface 912. At least a part of the functions may also be implemented by the processor 901 or the auxiliary controller 919. For example, the processor 901 or the auxiliary controller 919 may acquire the WUS including information indicating the receiving manner of the PS and flexibly detect the PS in the indicated receiving manner of the PS by performing functions of the acquiring unit 101 and the determining unit 102, thereby reducing power consumption.

The technology of the present disclosure may also be implemented as an in-vehicle system (or a vehicle) 940 including one or more blocks of the car navigation apparatus 920, the in-vehicle network 941 and a vehicle module 942. The vehicle module 942 generates vehicle data (such as a vehicle speed, an engine speed, and failure information), and outputs the generated data to the in-vehicle network 941.

The basic principle of the present disclosure has been described above in conjunction with particular embodiments. However, as can be appreciated by those ordinarily skilled in the art, all or any of the steps or components of the method and apparatus according to the disclosure can be implemented with hardware, firmware, software or a combination thereof in any computing device (including a processor, a storage medium, etc.) or a network of computing devices by those ordinarily skilled in the art in light of the disclosure of the disclosure and making use of their general circuit designing knowledge or general programming skills.

Moreover, the present disclosure further discloses a program product in which machine-readable instruction codes are stored. The aforementioned methods according to the embodiments can be implemented when the instruction codes are read and executed by a machine.

Accordingly, a memory medium for carrying the program product in which machine-readable instruction codes are stored is also covered in the present disclosure. The memory medium includes but is not limited to soft disc, optical disc, magnetic optical disc, memory card, memory stick and the like.

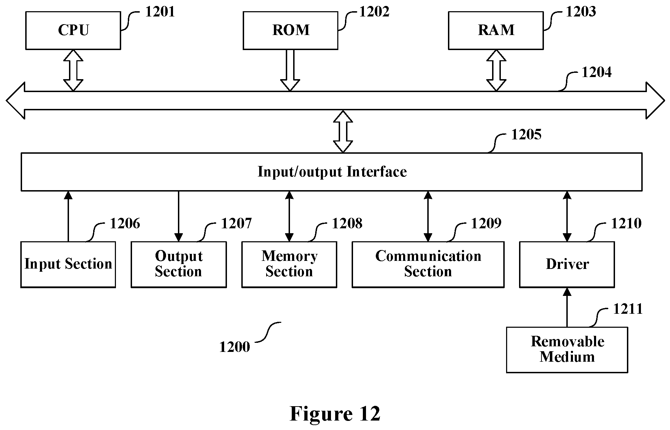

In the case where the present disclosure is realized with software or firmware, a program constituting the software is installed in a computer with a dedicated hardware structure (e.g. the general computer 1200 shown in Figure 12) from a storage medium or network, wherein the computer is capable of implementing various functions when installed with various programs.

In Figure 12, a central processing unit (CPU) 1201 executes various processing according to a program stored in a read-only memory (ROM) 1202 or a program loaded to a random access memory (RAM) 1203 from a memory section 1208. The data needed for the various processing of the CPU 1201 may be stored in the RAM 1203 as needed. The CPU 1201, the ROM 1202 and the RAM 1203 are linked with each other via a bus 1204. An input/output interface 1205 is also linked to the bus 1204.

The following components are linked to the input/output interface 1205: an input section 1206 (including keyboard, mouse and the like), an output section 1207 (including displays such as a cathode ray tube (CRT), a liquid crystal display (LCD), a loudspeaker and the like), a memory section 1208 (including hard disc and the like), and a communication section 1209 (including a network interface card such as a LAN card, modem and the like). The communication section 1209 performs communication processing via a network such as the Internet. A driver 1210 may also be linked to the input/output interface 1205, if needed. If needed, a removable medium 1211, for example, a magnetic disc, an optical disc, a magnetic optical disc, a semiconductor memory and the like, may be installed in the driver 1210, so that the computer program read therefrom is installed in the memory section 1208 as appropriate.

In the case where the foregoing series of processing is achieved through software, programs forming the software are installed from a network such as the Internet or a memory medium such as the removable medium 1211.

It should be appreciated by those skilled in the art that the memory medium is not limited to the removable medium 1211 shown in Figure 12, which has program stored therein and is distributed separately from the apparatus so as to provide the programs to users. The removable medium 1211 may be, for example, a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Alternatively, the memory medium may be the hard discs included in ROM 1202 and the memory section 1208 in which programs are stored, and can be distributed to users along with the device in which they are incorporated.

To be further noted, in the apparatus, method and system according to the present disclosure, the respective components or steps can be decomposed and/or recombined. These decompositions and/or recombinations shall be regarded as equivalent solutions of the disclosure. Moreover, the above series of processing steps can naturally be performed temporally in the sequence as described above but will not be limited thereto, and some of the steps can be performed in parallel or independently from each other.

Finally, to be further noted, the term "include", "comprise" or any variant thereof is intended to encompass nonexclusive inclusion so that a process, method, article or device including a series of elements includes not only those elements but also other elements which have been not listed definitely or an element(s) inherent to the process, method, article or device. Moreover, the expression "comprising a(n) ......" in which an element is defined will not preclude presence of an additional identical element(s) in a process, method, article or device comprising the defined element(s)" unless further defined.

Although the embodiments of the present disclosure have been described above in detail in connection with the drawings, it shall be appreciated that the embodiments as described above are merely illustrative rather than limitative of the present disclosure. Those skilled in the art can make various modifications and variations to the above embodiments without departing from the spirit and scope of the present disclosure. Therefore, the scope of the present disclosure is defined merely by the appended claims and their equivalents.

## Claims

1. An electronic apparatus for wireless communications, comprising:
processing circuitry, configured to:
acquire a wake-up signal from a base station in a case that user equipment performs discontinuous reception on an unlicensed frequency band, wherein the wake-up signal comprises information indicating a receiving manner of a paging signal; and
determine, based on the wake-up signal, an operation of the user equipment receiving the paging signal.

2. The electronic apparatus according to claim 1, wherein the information indicating the receiving manner of the paging signal comprises indication information of a predetermined limitation strategy to be adopted, which is used to limit the number of detections for the paging signal.

3. The electronic apparatus according to claim 2, wherein the indication information of the predetermined limitation strategy comprises an information bit indicating whether to adopt the predetermined limitation strategy or not.

4. The electronic apparatus according to claim 1, wherein the wake-up signal further comprises positions and the number of paging occasions for detecting the paging signal in a paging frame.

5. The electronic apparatus according to claim 2, wherein the predetermined limitation strategy comprises a back-off strategy, wherein the processing circuitry is configured to, in a case that a first detection for the paging signal fails, perform a second detection after waiting for a time period determined by the back-off strategy.

6. The electronic apparatus according to claim 5, wherein the back-off strategy comprises determining the time period to be waited for in a random manner or according to a predetermined rule, wherein the time period to be waited for is denoted by the number of paging occasions for detecting the paging signal in a paging frame.

7. The electronic apparatus according to claim 6, wherein the back-off strategy comprises determining the time period to be waited for according to the number of failures in detecting the paging signal.

8. The electronic apparatus according to claim 5, wherein the processing circuitry is further configured to, in a case of failing to detect the paging signal in a paging frame, stop detecting the paging signal and cause the user equipment to turn to a sleep state.

9. The electronic apparatus according to claim 2, wherein the predetermined limitation strategy comprises setting a counter which is configured to count the number of failures in detecting the paging signal, and the processing circuitry is configured to stop detecting the paging signal and cause the user equipment to turn to a sleep state, when counting of the counter reaches a predetermined threshold.

10. The electronic apparatus according to claim 9, wherein the predetermined threshold is less than the number of paging occasions for detecting the paging signal in a paging frame.

11. The electronic apparatus according to claim 9, wherein the processing circuitry is further configured to reset the counter in a case that the paging signal is detected before the counting of the counter reaches the predetermined threshold.

12. The electronic apparatus according to claim 2, wherein the predetermined limitation strategy comprises a back-off strategy and setting a counter, wherein the processing circuitry is configured to, in a case that a first detection for the paging signal fails, perform a second detection after waiting for a time period determined by the back-off strategy, the counter is configured to count the number of failures in detecting the paging signal, and the processing circuitry is configured to stop detecting the paging signal and cause the user equipment to turn to a sleep state, when counting of the counter reaches a predetermined threshold.

13. The electronic apparatus according to claim 1, wherein the processing circuitry is configured to receive the wake-up signal in a sleep state.

14. The electronic apparatus according to claim 1, wherein the processing circuitry is configured to detect the paging signal by decoding a physical downlink control channel.

15. An electronic apparatus for wireless communications, comprising:
processing circuitry, configured to:
generate a wake-up signal comprising information indicating a receiving manner of a paging signal, the wake-up signal being used to wake up user equipment in a sleep state and operating in a discontinuous reception mode on an unlicensed frequency band; and
transmit the wake-up signal to the user equipment on the unlicensed frequency band.

16. The electronic apparatus according to claim 15, wherein the information indicating the receiving manner of the paging signal comprises indication information of a predetermined limitation strategy to be adopted by the user equipment, and the predetermined limitation strategy is used to limit the number of detections for the paging signal.

17. The electronic apparatus according to claim 16, wherein the indication information of the predetermined limitation strategy comprises an information bit indicating whether to adopt the predetermined limitation strategy or not.

18. The electronic apparatus according to claim 15, wherein the wake-up signal further comprises positions and the number of paging occasions for detecting the paging signal in a paging frame.

19. The electronic apparatus according to claim 15, wherein the predetermined limitation strategy comprises a back-off strategy, wherein the user equipment, in a case that a first detection for the paging signal fails, performs a second detection after waiting for a time period determined by the back-off strategy.

20. The electronic apparatus according to claim 19, wherein the back-off strategy comprises determining the time period to be waited for in a random manner or according to a predetermined rule, wherein the time period to be waited for is denoted by the number of paging occasions for detecting the paging signal in a paging frame.

21. The electronic apparatus according to claim 20, wherein the back-off strategy comprises determining the time period to be waited for according to the number of failures in detecting the paging signal.

22. The electronic apparatus according to claim 15, wherein the predetermined limitation strategy comprises setting a counter which is configured to count the number of failures in detecting the paging signal, and the user equipment stops detecting the paging signal and turns to a sleep state when the counting of the counter reaches a predetermined threshold.

23. The electronic apparatus according to claim 22, wherein the predetermined threshold is less than the number of paging occasions for detecting the paging signal in a paging frame.

24. The electronic apparatus according to claim 15, wherein the predetermined limitation strategy comprises a back-off strategy and setting a counter, wherein the user equipment, in a case that a first detection for the paging signal fails, performs a second detection after waiting for a time period determined by the back-off strategy, the counter is configured to count the number of failures in detecting the paging signal, and the user equipment stops detecting the paging signal and turns to a sleep state when the counting of the counter reaches a predetermined threshold.

25. The electronic apparatus according to claim 15, wherein the processing circuitry is further configured to transmit a paging frame comprising the paging signal via a physical downlink control channel after transmitting the wake-up signal.

26. A method for wireless communications, comprising:
acquiring a wake-up signal from a base station in a case that user equipment performs discontinuous reception on an unlicensed frequency band, wherein the wake-up signal comprises information indicating a receiving manner of a paging signal; and
determining, based on the wake-up signal, an operation of the user equipment receiving the paging signal.

27. A method for wireless communications, comprising:
generating a wake-up signal comprising information indicating a receiving manner of a paging signal, the wake-up signal being used to wake up user equipment in a sleep state and operating in a discontinuous reception mode on an unlicensed frequency band; and
transmitting the wake-up signal to the user equipment on the unlicensed frequency band.

28. A computer-readable storage medium having computer-executable instructions stored thereon, which when executed, cause the method for wireless communications according to claim 26 or 27 to be performed.
